# EUROPEAN PATENT APPLICATION

(11) **EP 4 556 537 A1**
(43) Date of publication of application: **21.05.2025**
(21) Application number: 23859366.9
(22) Date of filing: 30.08.2023
(51) Int. Cl.: C09D 133/14, C09D 7/61, C08F 220/20, C08F 230/08, C08F 220/30, C03C 17/00

(54) **ANTI-FOG COATING AND PREPARATION METHOD, AND ANTI-FOG GLASS AND PREPARATION METHOD**

(30) Priority: 31.08.2022 CN 202211061719
(71) Applicant: Fuyao Glass Industry Group Co., Ltd., Fuqing, Fujian 350300 (CN)
(72) Inventor: SUN, Yingying, Fujian 350300 (CN); GUO, Shanji, Fujian 350300 (CN); KANG, Huang, Fujian 350300 (CN); ZHANG, Mingjie, Fujian 350300 (CN); KE, Cheng, Fujian 350300 (CN); WEI, Dingqiang, Fujian 350300 (CN)
(74) Representative: Patentanwälte Olbricht Buchhold Keulertz
(86) International application number: PCT/CN2023/115641
(87) International publication number: WO 2024/046337

(57) **Abstract**

An anti-fog coating and a preparation method, and anti-fog glass and a preparation method. An ultraviolet absorbent modified monomer having double bonds is synthesized, and then is polymerized with a silane monomer and an acrylate-based hydrophilic monomer. An obtained copolymer has significantly improved light resistance, oxidation resistance, weatherability and the like. A hydrophilic group of the acrylate-based hydrophilic monomer can ensure an anti-fog property, the copolymer is added to a silica sol to obtain an anti-fog coating, an inorganic component in the coating can enable the coating to have good mechanical properties such as hardness, and siloxane in the copolymer and siloxane in the sol also undergo polycondensation during curing to form a compact three-dimensional network structure, thereby further improving the hardness and weatherability of the coating.

## Description

The present application claims priority to a Chinese Patent Application No. 202211061719.7, filed with the China National Intellectual Property Administration on August 31, 2022, and entitled "ANTI-FOG COATING AND PREPARATION METHOD, AND ANTI-FOG GLASS AND PREPARATION METHOD", which is incorporated in the present application by reference in its entireties.

### Technical Field

The present invention belongs to a field of functional coating layers, and in particular relates to an anti-fog coating, an anti-fog glass and methods for preparing the same.

### Background Art

With development of intelligent automobiles, a B-pillar is not just an exterior trim. Many original equipment manufacturers have given the B-pillar various functions, including integrated biometric functions such as identifying face and fingerprint, NFC function, surround view, and luminous decoration. In some B-pillar assembly products, an exterior panel is provided with a light-transmitting area of view field for a camera, and if this area is fogged, it will affect the normal use of the camera and the like, and further affect the use of automatic (assisted) driving functions.

The fogging problem can be effectively solved by coating a surface within the field of view area for the camera with an anti-fog coating layer. However, since this area is exposed to ultraviolet rays for a long time, the coating layer is required to have a high light resistance. Anti-fog coating layers in related art generally have the problem of being not resistant to light.

### Summary of the Invention

An object of the present invention is to provide an anti-fog coating, an anti-fog glass and methods for preparing the same, so as to solve the problem of fogging in the field of view area for a camera of an exterior panel glass of the B-pillar in the related art and the problem that the existing anti-fog coating layer is not light-resistant.

In order to achieve the above object, the present invention adopts the following technical solutions.

A first aspect of the present invention provides an anti-fog coating containing a copolymer; and a silica sol,
wherein polymerization monomers of the copolymer include an ultraviolet absorber-modified monomer, a silane monomer and an acrylate-based hydrophilic monomer, and
the ultraviolet absorber-modified monomer is prepared by a ring-opening reaction between an ultraviolet absorber with a hydroxyl group and an acrylate-based monomer with an epoxy group.

Preferably, the silica sol is an organic-inorganic hybrid silica sol.

According to the anti-fog coating of the present invention, preferably, a mass ratio between the copolymer and the silica sol is (1 to 10):1, for example, 8:1, 5:1, and 3:1, etc.

According to the anti-fog coating of the present invention, the silica sol is prepared by mixing and reacting silicate, a catalyst, water, a third solvent, a leveling agent and a coupling agent.

According to the anti-fog coating of the present invention, the silane monomer is one or a combination of two or more selected from vinyltriethoxysilane, vinyltrimethoxysilane, γ-methacryloxypropyltrimethoxysilane, methylvinyldiethoxysilane, methylvinyldimethylsilane, vinyltriisopropenyloxysilane and vinyltriacetoxysilane.

A molecular structure of these silane monomers contains both a carbon-carbon double bond that can undergo copolymerization and siloxane, which provides conditions for subsequent condensation polymerization with the silica sol.

According to the anti-fog coating of the present invention, the acrylate-based hydrophilic monomer is one or a combination of two or more selected from hydroxyethyl acrylate, hydroxypropyl acrylate, hydroxybutyl acrylate, hydroxyethyl methylacrylate, hydroxypropyl methacrylate and hydroxybutyl methacrylate.

A molecular structure of the acrylate-based hydrophilic monomer contains polar groups such as hydroxyl, carboxyl, amine, and amide, which can improve hydrophilicity of the copolymer.

According to the anti-fog coating of the present invention, a mass ratio of the ultraviolet absorber-modified monomer, the silane monomer and the acrylate-based hydrophilic monomer is (0.3 to 1):(0.3 to 1):(1 to 10). Excessive addition of the silane monomer will affect the hydrophilicity of the copolymer, further affecting an anti-fog property of a coating layer.

According to the anti-fog coating of the present invention, the copolymer is prepared by polymerizing the polymerization monomers in the presence of an initiator. The initiator is a free radical initiator containing a nitrogen-nitrogen double bond, and is preferably an azo-based initiator, including but not limited to azobisisobutyronitrile and/or azobisisoheptanenitrile. This type of initiator decomposes to produce only one kind of free radical without other side reactions.

Types of the ultraviolet absorber include salicylates, benzophenones, and benzotriazoles. The present invention adopts an ultraviolet absorber with a hydroxyl group to perform a ring-opening reaction with the acrylate-based monomer with an epoxy group, so that the ultraviolet absorber is grafted into the acrylate-based monomer.

According to the anti-fog coating of the present invention, the ultraviolet absorber with a hydroxyl group is one or a combination of two or more selected from 2,2',4,4'-tetrahydroxybenzophenone, 2,4-dihydroxybenzophenone, 2,2'-hydroxy-4-methoxybenzophenone and 2,2'-dihydroxy-4,4'-dimethoxybenzophenone.

According to the anti-fog coating of the present invention, the ultraviolet absorber with a hydroxyl group has an absorption in the range of 260 nm to 400 nm, preferably 320 nm to 400 nm.

The acrylate-based monomer with an epoxy group has both an epoxy group and a carbon-carbon double bond, and can react with the hydroxyl group of the ultraviolet absorber and copolymerize with comonomers of the copolymer, and can be one or a combination of two or more selected from glycidyl methacrylate, 4-(oxiran-2-ylmethoxy)butyl acrylate and (S)-glyceryl methacrylate.

According to the anti-fog coating of the present invention, preferably, the ultraviolet absorber with a hydroxyl group and the acrylate-based monomer with an epoxy group undergo a ring-opening reaction in the presence of a catalyst to prepare the ultraviolet absorber-modified monomer. Here, a mass ratio between the ultraviolet absorber and the acrylate-based monomer with an epoxy group is (0.5 to 1.8):1, and an amount of the catalyst is 25% to 40% of a total mass of the above two substance. More preferably, the catalyst is a strongly acidic ion exchange resin, which contains a large amount of strongly acidic groups and is easy to dissociate H⁺ in a solution, and after the dissociation, negatively charged groups contained in the resin can adsorb and bond to other cations in the solution. The ion exchange resin used in the catalyst include but is not limited to Amberlyst-15 ion exchange resin or Amberlite IR-120 ion exchange resin. This type of catalyst has advantages of high activity and recyclability, and is more widely used.

According to the anti-fog coating of the present invention, in preparation of the silica sol, a mass ratio of the silicate, the coupling agent, the third solvent, water and the catalyst is (10 to 22):(5 to 18):(45 to 65):(6 to 15):(0.1 to 0.7), and the leveling agent is used in an amount of 0.05% to 0.3% with respect to a sum of masses of the silicate, the coupling agent, the third solvent, water and the catalyst.

According to the anti-fog coating of the present invention, in the preparation of the silica sol, the silicate is one or a combination of two or more of ethyl orthosilicate, methyl orthosilicate, propyl orthosilicate, and butyl orthosilicate, and/or
the catalyst is an acidic catalyst, and under an acidic catalyst condition, a silica gel is formed by further cross-linking of linear or randomly cross-linked polymers, which is more conducive to preparing a coating layer with excellent wear resistance, and the catalyst is one or a combination of two or more of acetic acid, hydrochloric acid and nitric acid, and/or
the leveling agent is one or a combination of two or more of polyether-modified siloxane, polyester-modified polymethylalkylsiloxane and polyether polyester-modified hydroxyl-containing polysiloxane, and the leveling agent is preferably polyether-modified polydimethyl siloxane. Common market brands include BYK333, BYK307, BYK306, BYK337, BYK341, and the like. The leveling agent of the present invention can effectively reduce a surface tension of the coating, prevent shrinkage cavity and increase surface smoothness, and/or
the coupling agent is one or a combination of two or more of γ-methacryloxypropyltrimethoxysilane, γ-aminopropyltriethoxysilane, γ-glycidyloxypropyltrimethoxysilane, trimethoxysilyl propyl diethylenetriamine and ureidopropyltriethoxysilane.

A second aspect of the present invention provides a method for preparing the anti-fog coating, the method including the following steps.

### Preparing the ultraviolet absorber-modified monomer:

In a first solvent, the ultraviolet absorber with a hydroxyl group and the acrylate-based monomer with an epoxy group undergo a ring-opening reaction in the presence of a catalyst, and after the reaction is completed, the catalyst is removed by filtering and then the solvent is removed, to obtain the ultraviolet absorber-modified monomer, and this modification process can improve an anti-aging property of the ultraviolet absorber and improve light aging resistance of the coating layer in actual use.

### Preparing the copolymer:

In a second solvent, the ultraviolet absorber-modified monomer, the silane monomer and the acrylate-based hydrophilic monomer undergo a polymerization reaction in the presence of an initiator at a preset temperature to obtain the copolymer, and the copolymer is an ultraviolet absorber copolymer modified by a silicone monomer and a hydrophilic monomer, and the preset temperature is preferably 65°C to 100°C.

### Preparing the silica sol:

Silicate, a catalyst, water, a third solvent, a leveling agent and a coupling agent are mixed for reaction to obtain the silica sol, and the silica sol is preferably aged for 0.5 days to 7 days, and the water is preferably deionized water.

### Preparing the anti-fog coating:

The copolymer and the silica sol are uniformly mixed in a ratio to obtain the anti-fog coating.

According to the method for preparing the anti-fog coating of the present invention, the first solvent and the second solvent are separately selected from alcohol solvents or ether solvents, including but not limited to ethanol, methanol, ethylene glycol methyl ether, ethylene glycol ethyl ether, ethylene glycol propyl ether, ethylene glycol butyl ether, propylene glycol methyl ether, propylene glycol ethyl ether, propylene glycol propyl ether and propylene glycol butyl ether, or a combination of two or more thereof.

A third aspect of the present invention provides an anti-fog glass, including: a glass substrate; and an anti-fog coating layer formed on a surface of the glass substrate by the anti-fog coating, in which the glass substrate includes a light-transmitting area and a non-light-transmitting area, and the anti-fog coating layer at least covers the light-transmitting area of the glass substrate.

According to the anti-fog glass of the present invention, a visible light transmittance of the light-transmitting area of the glass substrate is greater than 70%. Preferably, the glass substrate is soda-lime glass, aluminosilicate glass, lithium aluminosilicate glass or borosilicate glass. Different types and colors of glass can be selected according to needs. If not specifically specified, ultra-white glass is preferred since a visible light transmittance of the ultra-white glass is greater than 90%. A diopter of the light-transmitting area of the glass substrate is not greater than 110 mdpt, so that the light-transmitting area of the glass substrate can obtain excellent optical quality, which is more conducive to image collection in the light-transmitting area, making an image clearer and more recognizable. The glass substrate is a single tempered glass, for which a tempering treatment method can be chemical tempering and/or physical tempering.

According to the anti-fog glass of the present invention, the anti-fog coating layer has a thickness of 4 µm to 30 µm.

According to the anti-fog glass of the present invention, the anti-fog glass can be used for exterior panel glass of an A-pillar and/or a B-pillar. It should be noted that an intelligent B-pillar trim assembly of a car includes, in addition to the exterior panel glass, an inner plate affixed to the inside of the exterior panel glass, and may also include functional modules such as an infrared recognition module and/or a camera module, vehicle attachment components such as a breathable membrane, and a part that is connected to a vehicle such as a pin.

In addition to a printed edge, the glass substrate also has a visible area (that is, the light-transmitting area) that is translucent, and the anti-fog coating layer is disposed on a side of the light-transmitting area that faces the interior of the vehicle. The light-transmitting area can be used as the field of view for the camera, or as a display screen area for face recognition. The non-light-transmitting area can be shielded by ink printing to cover the substrate and functional modules of the A-pillar and the B-pillar, thereby improving overall visibility. The light-transmitting area is in a shape of an ellipse, a circle, or other designed shapes.

According to the anti-fog glass of the present invention, a distance between a boundary of the anti-fog coating layer and a boundary of the light-transmitting area is denoted as d, where d ≤ 5 mm. If d exceeds 5 mm, subsequent construction with a structural adhesive may be affected.

According to the anti-fog glass of the present invention, a xenon lamp aging time of the anti-fog coating layer is not less than 2400 h, and after a xenon lamp aging test, an appearance of the coating layer is observed to check whether there are any cracks. If there are no cracks, the anti-fog glass is qualified.

A fourth aspect of the present invention provides a method for preparing the anti-fog glass, the method including:
performing a pre-treatment on a glass substrate and cleaning the glass substrate for subsequent use; and
applying the anti-fog coating to a surface of a light-transmitting area of the glass substrate, and performing leveling and curing to form the anti-fog coating layer.

A purpose of the pre-treatment is not only to remove dust particles on the surface of the glass substrate, but also to increase a surface energy of the glass substrate, so that the coating can be spread more easily on the surface of the substrate. Preferably, a surface dyne value of the light-transmitting area after the pre-treatment is 60 or more, and a treatment method can be polishing, plasma treatment, or the like.

According to the method for preparing the anti-fog glass of the present invention, preferably, a method for applying can be selected from one of spraying, shower coating, spin coating, and the like. The spraying method can make the coating layer construction easier to operate and can ensure uniformity of the thickness of the coating layer. The spraying method includes pneumatic spraying, rotary cup spraying, ultrasonic spraying, and the like, and an appropriate spraying method can be selected according to specific production line design, shielding scheme, and the like. The coating layer obtained by ultrasonic spraying has higher uniformity, less raw material splashing, and high utilization rate, and is particularly suitable for actual production.

According to the method for preparing the anti-fog glass of the present invention, preferably, the leveling is performed for 10 s to 300 s, and the curing is performed at a temperature of 120°C to 200°C for 15 min to 720 min.

According to the present invention, the ultraviolet absorber with a hydroxyl group and the acrylate-based monomer with an epoxy group undergo a ring-opening reaction to synthesize an ultraviolet absorber-modified monomer with a double bond, and then the ultraviolet absorber-modified monomer undergoes a polymerization reaction with the silane monomer and the acrylate-based hydrophilic monomer to synthesize a silicone-modified ultraviolet absorber cross-linked copolymer. After being modified with the silicone, light resistance, oxidation resistance, weather resistance, and the like of the copolymer are significantly improved. At the same time, a hydrophilic group contained in the acrylate-based hydrophilic monomer can ensure an anti-fog property of the coating layer. By adding the above copolymer to a silica sol, especially an organic-inorganic hybrid silica sol, inorganic components in the silicone part can make the coating layer have good mechanical properties such as hardness, and the siloxane of the copolymer and the siloxane of the silica sol can also undergo a condensation polymerization reaction during curing to form a compact three-dimensional network structure, thereby further improving the hardness and weather resistance of the coating layer.

### Brief Description of Drawings

In order to illustrate examples of the present invention or technical solutions in the related art more clearly, the drawings needed to be used in the examples of the present invention will be briefly introduced below. Obviously, the drawings in the following description are merely some examples in the present invention. Those having ordinary skills in the art can obtain other drawings based on these drawings without exerting creative work.

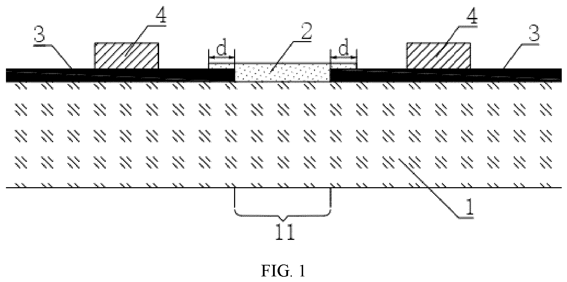

FIG. 1 is a cross-sectional schematic diagram of an anti-fog glass used for an exterior panel glass of a B-pillar according to an example of the present invention.

Explanation of reference numerals in the drawing: 1 glass substrate, 11 light-transmitting area, 2 anti-fog coating layer, 3 ink layer, and 4 structural adhesive.

### Detailed Description

In order to explain the present invention more clearly, the present invention is further described below with reference to preferred embodiments. It should be understood by those skilled in the art that the following specific description is illustrative rather than restrictive, and should not be used to limit the scope of protection of the present invention.

All numerical specifications in the present invention (such as temperature, time, concentration, weight, and the like, including ranges of each thereof) are generally approximate values that can be appropriately changed by increments of (+) or (-) 0.1 or 1.0. All numerical specifications can be understood as being preceded by the term "approximately".

A first aspect of the present invention provides an anti-fog coating containing a copolymer; and a silica sol, in which
polymerization monomers of the copolymer include an ultraviolet absorber-modified monomer, a silane monomer and an acrylate-based hydrophilic monomer, and
the ultraviolet absorber-modified monomer is prepared by a ring-opening reaction between an ultraviolet absorber with a hydroxyl group and an acrylate-based monomer with an epoxy group.

Preferably, the silica sol is an organic-inorganic hybrid silica sol.

According to the anti-fog coating of the present invention, preferably, a mass ratio between the copolymer and the silica is (1 to 10):1, for example, 5:1, or 3:1.

According to the anti-fog coating of the present invention, the silica sol is prepared by mixing and reacting silicate, a catalyst, water, a third solvent, a leveling agent and a coupling agent.

According to the anti-fog coating of the present invention, the silane monomer is one or a combination of two or more selected from vinyltriethoxysilane, vinyltrimethoxysilane, γ-methacryloxypropyltrimethoxysilane, methylvinyldiethoxysilane, methylvinyldimethylsilane, vinyltriisopropenyloxysilane and vinyltriacetoxysilane.

A molecular structure of these silane monomers contains both a carbon-carbon double bond that can undergo copolymerization and siloxane, which provides conditions for subsequent condensation polymerization with the silica sol.

According to the anti-fog coating of the present invention, the acrylate-based hydrophilic monomer is one or a combination of two or more selected from hydroxyethyl acrylate, hydroxypropyl acrylate, hydroxybutyl acrylate, hydroxyethyl methylacrylate, hydroxypropyl methacrylate and hydroxybutyl methacrylate.

A molecular structure of the acrylate-based hydrophilic monomer contains polar groups such as hydroxyl, carboxyl, amine, and amide, which can improve hydrophilicity of the copolymer.

According to the anti-fog coating of the present invention, a mass ratio of the ultraviolet absorber-modified monomer, the silane monomer and the acrylate-based hydrophilic monomer is (0.3 to 1):(0.3 to 1):(1 to 10). Excessive addition of the silane monomer will affect the hydrophilicity of the copolymer, further affecting an anti-fog property of a coating layer.

According to the anti-fog coating of the present invention, the copolymer is prepared by polymerizing the polymerization monomers in the presence of an initiator. The initiator is a free radical initiator containing a nitrogen-nitrogen double bond, and is preferably an azo-based initiator, including but not limited to azobisisobutyronitrile and/or azobisisoheptanenitrile. This type of initiator decomposes to produce only one kind of free radical without other side reactions.

Types of the ultraviolet absorber include salicylates, benzophenones, and benzotriazoles. The present invention adopts an ultraviolet absorber with a hydroxyl group to perform a ring-opening reaction with the acrylate-based monomer with an epoxy group, so that the ultraviolet absorber is grafted into the acrylate-based monomer.

According to the anti-fog coating of the present invention, the ultraviolet absorber with a hydroxyl group is one or a combination of two or more selected from 2,2',4,4'-tetrahydroxybenzophenone, 2,4-dihydroxybenzophenone, 2,2'-hydroxy-4-methoxybenzophenone and 2,2'-dihydroxy-4,4'-dimethoxybenzophenone.

According to the anti-fog coating of the present invention, the ultraviolet absorber with a hydroxyl group has an absorption in the range of 260 nm to 400 nm, preferably 320 nm to 400 nm.

The acrylate-based monomer with an epoxy group has both an epoxy group and a carbon-carbon double bond, and can react with the hydroxyl group of the ultraviolet absorber and copolymerize with comonomers of the copolymer, and can be one or a combination of two or more selected from glycidyl methacrylate, 4-(oxiran-2-ylmethoxy)butyl acrylate and (S)-glyceryl methacrylate.

According to the anti-fog coating of the present invention, preferably, the ultraviolet absorber with a hydroxyl group and the acrylate-based monomer with an epoxy group undergo a ring-opening reaction in the presence of a catalyst to prepare the ultraviolet absorber-modified monomer. Here, a mass ratio between the ultraviolet absorber and the acrylate-based monomer with an epoxy group is (0.5 to 1.8):1, and an amount of the catalyst is 25% to 40% of a total mass of the above two substance. More preferably, the catalyst is a strongly acidic ion exchange resin, which contains a large amount of strongly acidic groups and is easy to dissociate H⁺ in a solution, and after the dissociation, negatively charged groups contained in the resin can adsorb and bond to other cations in the solution. The ion exchange resin used in the catalyst include but is not limited to Amberlyst-15 ion exchange resin or Amberlite IR-120 ion exchange resin. This type of catalyst has advantages of high activity and recyclability, and is more widely used.

According to the anti-fog coating of the present invention, in preparation of the silica sol, a mass ratio of the silicate, the coupling agent, the third solvent, water and the catalyst is (10 to 22):(5 to 18):(45 to 65):(6 to 15):(0.1 to 0.7), and the leveling agent is used in an amount of 0.05% to 0.3% with respect to a sum of masses of the silicate, the coupling agent, the third solvent, water and the catalyst.

According to the anti-fog coating of the present invention, in the preparation of the silica sol, the silicate is one or a combination of two or more of ethyl orthosilicate, methyl orthosilicate, propyl orthosilicate, and butyl orthosilicate.

The catalyst is an acidic catalyst, and under an acidic catalyst condition, a silica gel is formed by further cross-linking of linear or randomly cross-linked polymers, which is more conducive to preparing a coating layer with excellent wear resistance, and the catalyst is one or a combination of two or more of acetic acid, hydrochloric acid and nitric acid.

The leveling agent is one or a combination of two or more of polyether-modified siloxane, polyester-modified polymethylalkylsiloxane and polyether polyester-modified hydroxyl-containing polysiloxane, and the leveling agent is preferably polyether-modified polydimethyl siloxane. Common market brands include BYK333, BYK307, BYK306, BYK337, BYK341, and the like. The leveling agent of the present invention can effectively reduce a surface tension of the coating, prevent shrinkage cavity and increase surface smoothness, and/or
the coupling agent is one or a combination of two or more of γ-methacryloxypropyltrimethoxysilane, γ-aminopropyltriethoxysilane, γ-glycidyloxypropyltrimethoxysilane, trimethoxysilyl propyl diethylenetriamine and ureidopropyltriethoxysilane.

A second aspect of the present invention provides a method for preparing the anti-fog coating, the method including the following steps.

### Preparing the ultraviolet absorber-modified monomer:

In a first solvent, the ultraviolet absorber with a hydroxyl group and the acrylate-based monomer with an epoxy group undergo a ring-opening reaction in the presence of a catalyst, and after the reaction is completed, the catalyst is removed by filtering and then the solvent is removed, to obtain the ultraviolet absorber-modified monomer, and this modification process can improve an anti-aging property of the ultraviolet absorber and improve light aging resistance of the coating layer in actual use.

### Preparing the copolymer:

In a second solvent, the ultraviolet absorber-modified monomer, the silane monomer and the acrylate-based hydrophilic monomer undergo a polymerization reaction in the presence of an initiator at a preset temperature to obtain the copolymer, and the copolymer is an ultraviolet absorber copolymer modified by a silicone monomer and a hydrophilic monomer, and the preset temperature is preferably 65°C to 100°C.

### Preparing the silica sol:

Silicate, a catalyst, water, a third solvent, a leveling agent and a coupling agent are mixed for reaction to obtain the silica sol, and the silica sol is preferably aged for 0.5 days to 7 days, and the water is preferably deionized water.

### Preparing the anti-fog coating:

The copolymer and the silica sol are uniformly mixed in a ratio to obtain the anti-fog coating.

According to the method for preparing the anti-fog coating of the present invention, the first solvent and the second solvent are separately selected from alcohol solvents or ether solvents, including but not limited to ethanol, methanol, ethylene glycol methyl ether, ethylene glycol ethyl ether, ethylene glycol propyl ether, ethylene glycol butyl ether, propylene glycol methyl ether, propylene glycol ethyl ether, propylene glycol propyl ether and propylene glycol butyl ether, or a combination of two or more thereof.

A third aspect of the present invention provides an anti-fog glass, including: a glass substrate 1; and an anti-fog coating layer 2 formed on a surface of the glass substrate 1 by the anti-fog coating, in which the glass substrate 1 includes a light-transmitting area 11 and a non-light-transmitting area, and the anti-fog coating layer 2 at least covers the light-transmitting area 11 of the glass substrate 1, as shown in FIG. 1.

According to the anti-fog glass of the present invention, a visible light transmittance of the light-transmitting area 11 of the glass substrate 1 is greater than 70%. Preferably, the glass substrate 1 is soda-lime glass, aluminosilicate glass, lithium aluminosilicate glass or borosilicate glass. Different types and colors of glass can be selected according to needs. If not specifically specified, ultra-white glass is preferred since a visible light transmittance of the ultra-white glass is greater than 90%. A diopter of the light-transmitting area 11 of the glass substrate 1 is not greater than 110 mdpt, so that the light-transmitting area 11 of the glass substrate 1 can obtain excellent optical quality, which is more conducive to image collection in the light-transmitting area 11, making an image clearer and more recognizable. The glass substrate 1 is a single tempered glass, for which a tempering treatment method can be chemical tempering and/or physical tempering.

According to the anti-fog glass of the present invention, the anti-fog coating layer 2 has a thickness of 4 µm to 30 µm.

According to the anti-fog glass of the present invention, the anti-fog glass can be used for exterior panel glass of an A-pillar and/or a B-pillar as shown in FIG. 1. It should be noted that an intelligent B-pillar trim assembly of a car includes, in addition to the exterior panel glass, an inner plate affixed to the inside of the exterior panel glass, and may also include functional modules such as an infrared recognition module and/or a camera module, vehicle attachment components such as a breathable membrane, and a part that is connected to a vehicle such as a pin.

The anti-fog coating layer 2 is disposed on a side of the light-transmitting area 11 that faces the interior of the vehicle. The light-transmitting area 11 can be used as the field of view for the camera, or as a display screen area for face recognition. The non-light-transmitting area can be shielded by ink printing. An ink layer 3 is used to cover the substrate and functional modules of the A-pillar and the B-pillar, thereby improving overall visibility. The light-transmitting area 11 is in a shape of an ellipse, a circle, or other designed shapes.

According to the anti-fog glass of the present invention, a distance between a boundary of the anti-fog coating layer 2 and a boundary of the light-transmitting area 11 is denoted as d, where d ≤ 5 mm. If d exceeds 5 mm, subsequent construction with a structural adhesive 4 may be affected.

According to the anti-fog glass of the present invention, a xenon lamp aging time of the anti-fog coating layer 2 is not less than 2400 h, and after a xenon lamp aging test, an appearance of the coating layer is observed to check whether there are any cracks. If there are no cracks, the anti-fog glass is qualified.

A fourth aspect of the present invention provides a method for preparing the anti-fog glass, the method including:
performing a pre-treatment on the glass substrate 1 and cleaning the glass substrate 1 for subsequent use; and
applying the anti-fog coating to the surface of the light-transmitting area 11 of the glass substrate 1, and performing leveling and curing to form the anti-fog coating layer 2.

A purpose of the pre-treatment is not only to remove dust particles on the surface of the glass substrate 1, but also to increase a surface energy of the glass substrate 1, so that the coating can be spread more easily on the surface of the substrate 1. Preferably, a surface dyne value of the light-transmitting area 11 after the pre-treatment is 60 or more, and a treatment method can be polishing, plasma treatment, or the like.

According to the method for preparing the anti-fog glass of the present invention, preferably, a method for applying can be selected from one of spraying, shower coating, spin coating, and the like. The spraying method can make the coating layer construction easier to operate and can ensure uniformity of the thickness of the coating layer. The spraying method includes pneumatic spraying, rotary cup spraying, ultrasonic spraying, and the like, and an appropriate spraying method can be selected according to specific production line design, shielding scheme, and the like. The coating layer obtained by ultrasonic spraying has higher uniformity, less raw material splashing, and high utilization rate, and is particularly suitable for actual production.

According to the method for preparing the anti-fog glass of the present invention, preferably, the leveling is performed for 10 s to 300 s, and the curing is performed at a temperature of 120°C to 200°C for 15 min to 720 min.

### Example 1

This example prepares an anti-fog coating and an anti-fog glass, and specific steps are as follows.

### 1) Preparation of an ultraviolet absorber-modified monomer

To a flask, 1.23 g of 2,2',4,4'-tetrahydroxybenzophenone was weighed and added, then 1.42 g of glycidyl methacrylate and 25 g of propylene glycol methyl ether were added and uniformly stirred, then 0.72 g of Amberlyst-15 ion exchange resin was added, and the mixture was heated to 60°C and reacted for 3 h. After the reaction was completed, the ion exchange resin was filtered off, and the filtrate was subjected to rotary evaporation to remove the solvent, and the remaining ultraviolet absorber-modified monomer reaction solution was left to stand for use.

### 2) Preparation of a copolymer

To a three-necked flask, 1 g of the ultraviolet absorber-modified monomer, 1 g of methylvinyldiethoxysilane, 2 g of hydroxybutyl acrylate and 50 g of propylene glycol ethyl ether were weighed and added, and then 0.1 g of azobisisoheptanenitrile was added and stirred, and the mixture was reacted at 75°C for 3 h to obtain a copolymer.

### 3) Preparation of a silica sol

Ethyl orthosilicate, KH560 (γ-glycidyloxypropyltrimethoxysilane), anhydrous ethanol, water and hydrochloric acid were weighed at a mass ratio of 10:8:45:7:0.24, and firstly, ethyl orthosilicate, KH560, anhydrous ethanol and water were poured into a reaction flask and stirred uniformly, then hydrochloric acid with a mass fraction of 1% was added dropwise, and finally a BYK307 leveling agent was added, in which the amount of the BYK307 leveling agent was 0.05% with respect to a sum of masses of the ethyl orthosilicate, KH560, anhydrous ethanol, water and hydrochloric acid, and then the mixture was stirred thoroughly and uniformly for 3 h and aged for 2 days to obtain a silica sol.

### 4) Preparation of an anti-fog coating

The copolymer was added to the silica sol at a mass ratio of 8:1, and stirred at room temperature for 4 h to obtain an anti-fog coating, which was then allowed to stand for use.

### 5) Preparation of an anti-fog glass

A white soda lime tempered glass substrate with a thickness of 3.2 mm was selected for polishing pre-treatment with a nano-cerium oxide polishing liquid, and after the pre-treatment, a surface dyne value of the glass substrate was 70.

The anti-fog coating prepared in step 4) was applied onto the surface of the glass substrate after the pre-treatment, leveled for 30 seconds and then cured at 180°C to obtain an anti-fog glass.

### Example 2

This example prepares an anti-fog coating and an anti-fog glass, and specific steps are as follows.

### 1) Preparation of an ultraviolet absorber-modified monomer

To a flask, 1.23 g of 2,2',4,4'-tetrahydroxybenzophenone was weighed and added, then 1.42 g of glycidyl methacrylate and 25 g of propylene glycol methyl ether were added and uniformly stirred, then 0.72 g of Amberlyst-15 ion exchange resin was added, and the mixture was heated to 60°C and reacted for 3 h. After the reaction was completed, the ion exchange resin was filtered off, and the filtrate was subjected to rotary evaporation to remove the solvent, and the remaining ultraviolet absorber-modified monomer reaction solution was left to stand for use.

### 2) Preparation of a copolymer

To a three-necked flask, 1 g of the ultraviolet absorber-modified monomer, 1 g of methylvinyldiethoxysilane, 5 g of hydroxybutyl acrylate and 50 g of propylene glycol ethyl ether were weighed and added, and then 0.1 g of azobisisoheptanenitrile was added and stirred, and the mixture was reacted at 75°C for 3 h to obtain a copolymer.

### 3) Preparation of a silica sol

Ethyl orthosilicate, KH560, anhydrous ethanol, water and hydrochloric acid were weighed at a mass ratio of 10:8:45:7:0.24, and firstly, ethyl orthosilicate, KH560, anhydrous ethanol and water were poured into a reaction flask and stirred uniformly, then hydrochloric acid with a mass fraction of 1% was added dropwise, and finally a BYK307 leveling agent was added, in which the amount of the BYK307 leveling agent was 0.05% with respect to a sum of masses of the ethyl orthosilicate, KH560, anhydrous ethanol, water and hydrochloric acid, and then the mixture was stirred thoroughly and uniformly for 3 h and aged for 2 days to obtain a silica sol.

### 4) Preparation of an anti-fog coating

The copolymer was added to the silica sol at a mass ratio of 8:1 and stirred at room temperature for 4 h to make the reaction solution fully uniform.

### 5) Preparation of an anti-fog glass

A white soda lime tempered glass substrate with a thickness of 3.2 mm was selected for polishing pre-treatment with a nano-cerium oxide polishing liquid, and after the pre-treatment, a surface dyne value of the glass substrate was 70.

The anti-fog coating prepared in step 4) was applied onto the surface of the glass substrate after the pre-treatment, leveled for 30 seconds and then cured at 180°C to obtain an anti-fog glass.

### Example 3

This example prepares an anti-fog coating and an anti-fog glass, and specific steps are as follows.

### 1) Preparation of an ultraviolet absorber-modified monomer

To a flask, 1.23 g of 2,4-dihydroxybenzophenone was weighed and added, then 1.42 g of (S)-glyceryl methacrylate and 25 g of ethylene glycol methyl ether were added and uniformly stirred, then 0.72 g of Amberlite IR-120 ion exchange resin was added, and the mixture was heated to 60°C and reacted for 3 h. After the reaction was completed, the ion exchange resin was filtered off, and the filtrate was subjected to rotary evaporation to remove the solvent, and the remaining ultraviolet absorber-modified monomer reaction solution was left to stand for use.

### 2) Preparation of a copolymer

To a three-necked flask, 0.3 g of the ultraviolet absorber-modified monomer, 0.3 g of KH570 (γ-methacryloxypropyltrimethoxysilane), 2 g of hydroxyethyl methylacrylate and 50 g of ethylene glycol ethyl ether were weighed and added, and then 0.1 g of azobisisobutyronitrile was added and stirred, and the mixture was reacted at 75°C for 3 h to obtain a copolymer.

### 3) Preparation of a silica sol

Propyl orthosilicate, γ-methacryloxypropyltrimethoxysilane, anhydrous methanol, water and nitric acid were weighed at a mass ratio of 10:8:45:7:0.24, and firstly, propyl orthosilicate, γ-methacryloxypropyltrimethoxysilane, anhydrous methanol and water were poured into a reaction flask and stirred uniformly, then nitric acid was added dropwise, and finally a polyether-modified siloxane leveling agent was added, in which the amount of the polyether-modified siloxane leveling agent was 0.05% with respect to a sum of masses of the propyl orthosilicate, γ-methacryloxypropyltrimethoxysilane, anhydrous methanol, water and nitric acid, and then the mixture was stirred thoroughly and uniformly for 3 h and aged for 2 days to obtain a silica sol.

### 4) Preparation of an anti-fog coating

The copolymer was added to the silica sol at a mass ratio of 3:1, and stirred at room temperature for 4 h to obtain an anti-fog coating, which was then allowed to stand for use.

### 5) Preparation of an anti-fog glass

A white soda lime tempered glass substrate with a thickness of 3.2 mm was selected for polishing pre-treatment with a nano-cerium oxide polishing liquid, and after the pre-treatment, a surface dyne value of the glass substrate was 70.

The anti-fog coating prepared in step 4) was applied onto the surface of the glass substrate after the pre-treatment, leveled for 30 seconds and then cured at 180°C to obtain an anti-fog glass.

### Example 4

This example prepares an anti-fog coating and an anti-fog glass, and specific steps are as follows.

### 1) Preparation of an ultraviolet absorber-modified monomer

To a flask, 1.07 g of 2,2'-hydroxy-4-methoxybenzophenone was weighed and added, then 1.42 g of 4-(oxiran-2-ylmethoxy)butyl acrylate and 25 g of ethylene glycol propyl ether were added and uniformly stirred, then 0.72 g of Amberlyst-15 ion exchange resin was added, and the mixture was heated to 60°C and reacted for 3 h. After the reaction was completed, the ion exchange resin was filtered off, and the filtrate was subjected to rotary evaporation to remove the solvent, and the remaining ultraviolet absorber-modified monomer reaction solution was left to stand for use.

### 2) Preparation of a copolymer

To a three-necked flask, 0.8 g of the ultraviolet absorber-modified monomer, 1 g of vinyltriethoxysilane, 2 g of hydroxybutyl methacrylate and 50 g of ethylene glycol butyl ether were weighed and added, and then 0.175 g of azobisisoheptanenitrile was added and stirred, and the mixture was reacted at 75°C for 3 h to obtain a copolymer.

### 3) Preparation of a silica sol

Methyl orthosilicate, γ-aminopropyltriethoxysilane, anhydrous ethanol, water and acetic acid were weighed at a mass ratio of 10:8:45:7:0.24, and firstly, methyl orthosilicate, γ-aminopropyltriethoxysilane, anhydrous ethanol and water were poured into a reaction flask and stirred uniformly, then acetic acid was added dropwise, and finally a BYK333 leveling agent was added, in which the amount of the BYK333 leveling agent was 0.05% with respect to a sum of masses of the methyl orthosilicate, γ-aminopropyltriethoxysilane, anhydrous ethanol, water and acetic acid, and then the mixture was stirred thoroughly and uniformly for 3 h and aged for 2 days to obtain a silica sol.

### 4) Preparation of an anti-fog coating

The copolymer was added to the silica sol at a mass ratio of 5:1, and stirred at room temperature for 4 h to obtain an anti-fog coating, which was then allowed to stand for use.

### 5) Preparation of an anti-fog glass

A white soda lime tempered glass substrate with a thickness of 3.2 mm was selected for polishing pre-treatment with a nano-cerium oxide polishing liquid, and after the pre-treatment, a surface dyne value of the glass substrate was 70.

The anti-fog coating prepared in step 4) was applied onto the surface of the glass substrate after the pre-treatment, leveled for 30 seconds and then cured at 180°C to obtain an anti-fog glass.

### Example 5

This example prepares an anti-fog coating and an anti-fog glass, and specific steps are as follows.

### 1) Preparation of an ultraviolet absorber-modified monomer

To a flask, 1.07 g of 2,2'-dihydroxy-4,4'-dimethoxybenzophenone was weighed and added, then 1.42 g of glycidyl methacrylate and 25 g of propylene glycol propyl ether were added and uniformly stirred, then 0.72 g of Amberlite IR-120 ion exchange resin was added, and the mixture was heated to 60°C and reacted for 3 h. After the reaction was completed, the ion exchange resin was filtered off, and the filtrate was subjected to rotary evaporation to remove the solvent, and the remaining ultraviolet absorber-modified monomer reaction solution was left to stand for use.

### 2) Preparation of a copolymer

To a three-necked flask, 0.5 g of the ultraviolet absorber-modified monomer, 0.5 g of vinyltrimethoxysilane, 5 g of hydroxyethyl acrylate and 50 g of propylene glycol butyl ether were weighed and added, and then 0.175 g of azobisisobutyronitrile was added and stirred, and the mixture was reacted at 75°C for 3 h to obtain a copolymer.

### 3) Preparation of a silica sol

Butyl orthosilicate, trimethoxysilyl propyl diethylenetriamine, anhydrous ethanol, water and nitric acid were weighed at a mass ratio of 10:8:45:7:0.24, and firstly, butyl orthosilicate, trimethoxysilyl propyl diethylenetriamine, anhydrous ethanol and water were poured into a reaction flask and stirred uniformly, then nitric acid was added dropwise, and finally a polyether polyester-modified hydroxyl-containing polysiloxane leveling agent was added, in which the amount of the polyether polyester-modified hydroxyl-containing polysiloxane leveling agent was 0.05% with respect to a sum of masses of the butyl orthosilicate, trimethoxysilyl propyl diethylenetriamine, anhydrous ethanol, water and nitric acid, and then the mixture was stirred thoroughly and uniformly for 3 h and aged for 2 days to obtain a silica sol.

### 4) Preparation of an anti-fog coating

The copolymer was added to the silica sol at a mass ratio of 5:1, and stirred at room temperature for 4 h to obtain an anti-fog coating, which was then allowed to stand for use.

### 5) Preparation of an anti-fog glass

A white soda lime tempered glass substrate with a thickness of 3.2 mm was selected for polishing pre-treatment with a nano-cerium oxide polishing liquid, and after the pre-treatment, a surface dyne value of the glass substrate was 70.

The anti-fog coating prepared in step 4) was applied onto the surface of the glass substrate after the pre-treatment, leveled for 30 seconds and then cured at 180°C to obtain an anti-fog glass.

### Comparative Example 1

The present comparative example prepares an anti-fog coating and an anti-fog glass, and specific steps are as follows.

### 1) Preparation of an ultraviolet absorber-modified monomer

To a flask, 1.07 g of 2,2'-hydroxy-4-methoxybenzophenone was weighed and added, then 1.42 g of 4-(oxiran-2-ylmethoxy)butyl acrylate and 25 g of ethylene glycol propyl ether were added and uniformly stirred, then 0.72 g of Amberlyst-15 ion exchange resin was added, and the mixture was heated to 60°C and reacted for 3 h. After the reaction was completed, the ion exchange resin was filtered off, and the filtrate was subjected to rotary evaporation to remove the solvent, and the remaining ultraviolet absorber-modified monomer reaction solution was left to stand for use.

### 2) Preparation of a copolymer

To a three-necked flask, 0.8 g of the ultraviolet absorber-modified monomer, 2 g of hydroxybutyl methacrylate and 50 g of ethylene glycol butyl ether were weighed and added, and then 0.175 g of azobisisoheptanenitrile was added and stirred, and the mixture was reacted at 75°C for 3 h to obtain a copolymer.

### 3) Preparation of a silica sol

Methyl orthosilicate, γ-aminopropyltriethoxysilane, anhydrous ethanol, water and acetic acid were weighed at a mass ratio of 10:8:45:7:0.24, and firstly, methyl orthosilicate, γ-aminopropyltriethoxysilane, anhydrous ethanol and water were poured into a reaction flask and stirred uniformly, then acetic acid was added dropwise, and finally a BYK333 leveling agent was added, in which the amount of the BYK333 leveling agent was 0.05% with respect to a sum of masses of the methyl orthosilicate, γ-aminopropyltriethoxysilane, anhydrous ethanol, water and acetic acid, and then the mixture was stirred thoroughly and uniformly for 3 h and aged for 2 days to obtain a silica sol.

### 4) Preparation of an anti-fog coating

The copolymer was added to the silica sol at a mass ratio of 5:1, and stirred at room temperature for 4 h to obtain an anti-fog coating, which was then allowed to stand for use.

### 5) Preparation of an anti-fog glass

A white soda lime tempered glass substrate with a thickness of 3.2 mm was selected for polishing pre-treatment with a nano-cerium oxide polishing liquid, and after the pre-treatment, a surface dyne value of the glass substrate was 70.

The anti-fog coating prepared in step 4) was applied onto the surface of the glass substrate after the pre-treatment, leveled for 30 seconds and then cured at 180°C to obtain an anti-fog glass.

### Comparative Example 2

The present comparative example prepares an anti-fog coating and an anti-fog glass, and specific steps are as follows.

### 1) Preparation of an ultraviolet absorber-modified monomer

To a flask, 1.23 g of 2,4-dihydroxybenzophenone was weighed and added, then 1.42 g of (S)-glyceryl methacrylate and 25 g of ethylene glycol methyl ether were added and uniformly stirred, then 0.72 g of Amberlite IR-120 ion exchange resin was added, and the mixture was heated to 60°C and reacted for 3 h. After the reaction was completed, the ion exchange resin was filtered off, and the filtrate was subjected to rotary evaporation to remove the solvent, and the remaining ultraviolet absorber-modified monomer reaction solution was left to stand for use.

### 2) Preparation of a copolymer

To a three-necked flask, 0.3 g of the ultraviolet absorber-modified monomer, 0.3 g of KH570 (γ-methacryloxypropyltrimethoxysilane), 2 g of hydroxyethyl methylacrylate and 50 g of ethylene glycol ethyl ether were weighed and added, and then 0.1 g of azobisisobutyronitrile was added and stirred, and the mixture was reacted at 75°C for 3 h to obtain a copolymer.

### 3) Preparing an anti-fog glass

A white soda lime tempered glass substrate with a thickness of 3.2 mm was selected for polishing pre-treatment with a nano-cerium oxide polishing liquid, and after the pre-treatment, a surface dyne value of the glass substrate was 70.

The copolymer prepared in step 2) was applied onto the surface of the glass substrate after the pre-treatment, leveled for 30 seconds and then cured at 180°C to obtain an anti-fog glass.

### Comparative Example 3

The present comparative example prepares an anti-fog coating and an anti-fog glass, and specific steps are as follows.

### 1) Preparation of an ultraviolet absorber-modified monomer

To a flask, 1.23 g of 2,2',4,4'-tetrahydroxybenzophenone was weighed and added, then 1.42 g of glycidyl methacrylate and 25 g of propylene glycol methyl ether were added and uniformly stirred, then 0.72 g of Amberlyst-15 ion exchange resin was added, and the mixture was heated to 60°C and reacted for 3 h. After the reaction was completed, the ion exchange resin was filtered off, and the filtrate was subjected to rotary evaporation to remove the solvent, and the remaining ultraviolet absorber-modified monomer reaction solution was left to stand for use.

### 2) Preparation of a copolymer

To a three-necked flask, 1 g of the ultraviolet absorber-modified monomer, 1 g of methylvinyldiethoxysilane, 2 g of hydroxybutyl acrylate and 50 g of propylene glycol ethyl ether were weighed and added, and then 0.1 g of azobisisoheptanenitrile was added and stirred, and the mixture was reacted at 75°C for 3 h to obtain a copolymer.

### 3) Preparation of a silica sol

Ethyl orthosilicate, KH560, anhydrous methanol, water and hydrochloric acid were weighed at a mass ratio of 10:8:45:7:0.24, and firstly, ethyl orthosilicate, KH560, anhydrous ethanol and water were poured into a reaction flask and stirred uniformly, then hydrochloric acid with a mass fraction of 1% was added dropwise, and finally a BYK307 leveling agent was added, in which the amount of the BYK307 leveling agent was 0.05% with respect to a sum of masses of the ethyl orthosilicate, KH560, anhydrous ethanol, water and hydrochloric acid, and then the mixture was stirred thoroughly and uniformly for 3 h and aged for 2 days to obtain a silica sol.

### 4) Preparation of an anti-fog coating

The copolymer was added to the silica sol at a mass ratio of 5:0.3, and stirred at room temperature for 4 h to obtain an anti-fog coating, which was then allowed to stand for use.

### 5) Preparation of an anti-fog glass

A white soda lime tempered glass substrate with a thickness of 3.2 mm was selected for polishing pre-treatment with a nano-cerium oxide polishing liquid, and after the pre-treatment, a surface dyne value of the glass substrate was 70.

The anti-fog coating prepared in step 4) was applied onto the surface of the glass substrate after the pre-treatment, leveled for 30 seconds and then cured at 180°C to obtain an anti-fog glass.

### Performance Tests:

Performance of the coating layers for an anti-fog glass prepared in each example and comparative example was tested. Test methods are as follows and test results are shown in Table 1.

### 1) Coating layer hardness evaluation: pencil hardness test.

Hardness of the coating layer is tested according to a standard in GB/T 6739 2066 "Determination of Pencil Hardness of Coating Films".

### 2) Xenon lamp aging test

The xenon lamp aging test is to put a test piece into a xenon lamp aging box. Test conditions are as follows: blackboard temperature 90±2°C, relative humidity 20±10%, irradiation intensity 66 W/m² between 300 nm and 400 nm, irradiation time 2400 h. After the xenon lamp aging test, an appearance of the coating layer is observed to check whether there are any cracks. If there are no cracks, the test piece is qualified.

### 3) Anti-fog test:

The anti-fog glass is placed in a 20°C, 50% RH environment for 1 h, then transferred to more than 100 mL of 35°C water (5 cm from a water surface) and a fogging time (s) is measured by visual observation.

### 4) Adhesion evaluation: adhesion test.

Adhesion of the coating layer is tested according to a standard in GB/T9286-1998 "Scratch test for paint and varnish films". The test piece is qualified if small pieces peel off at an intersection of cuts and an actual damage in a cross-cut area is equal to or less than 5%.

**Table 1: Performance Test Results of Comparative Examples 1 to 3 and Examples 1 to 5**

| Evaluation item | Comparative Example | | | Example | | | | |
|---|---|---|---|---|---|---|---|---|
| | 1 | 2 | 3 | 1 | 2 | 3 | 4 | 5 |
| Coating layer thickness/µm | 10.2 | 9.8 | 9.7 | 10.2 | 9.9 | 10.3 | 10.1 | 10 |
| Anti-fog property/s | 37 | 34 | 42 | 35 | 43 | 39 | 37 | 40 |
| Pencil hardness | 3H | H | 2H | 5H | 5H | 4H | 4H | 4H |
| Xenon lamp aging | Unqualified | Qualified | Qualified | Qualified | Qualified | Qualified | Qualified | Qualified |
| Adhesion test | Qualified | Unqualified | Unqualified | Qualified | Qualified | Qualified | Qualified | Qualified |

As shown in Table 1, the anti-fog glasses of Examples 1 to 5 satisfy a requirement in the xenon lamp aging resistance and have the anti-fog property. When applied to the B-pillar decorative plate glass, the glasses can be prevented from fogging so as not to affect the use of the camera, thereby ensuring driving safety. Moreover, the pencil hardness of the coating layers of Examples 1 to 5 is relatively high, which can reduce the problem of coating layer scratches caused by transportation during handling in actual production.

In comparison between Example 1 and Example 2, the mass of the acrylate-based hydrophilic monomer in Example 2 is higher than the mass of the acrylate-based hydrophilic monomer in Example 1, and the anti-fog property of Example 2 is better, which indicates that the acrylate-based hydrophilic monomer affects the anti-fog property of the coating layer, that is, the higher the content of the acrylate-based hydrophilic monomer, the better the anti-fog property.

In comparison between Comparative Example 1 and Example 4, Comparative Example 1 does not contain a silane monomer, and the xenon lamp aging resistance of the coating layer of Comparative Example 1 does not satisfy the requirement, indicating that when the ultraviolet absorber lacks silicone modification, the copolymer is poor in light resistance and weather resistance.

In comparison between Comparative Example 2 and Example 3, Comparative Example 2 does not contain a silica sol, and the adhesion of the coating layer does not satisfy the requirement and the hardness thereof is poor, indicating that the large amount of siloxy groups in the silica sol can provide a better bonding force with glass and can also improve the hardness of the coating layer.

In comparison between Comparative Example 3 and Example 1, the ratio of the copolymer to the silica sol in Comparative Example 3 is greater than the ratio of the copolymer to the silica sol in Example 1, and the adhesion of the coating layer in Comparative Example 3 does not satisfy the requirement and the hardness thereof is poor, but the anti-fog property of Comparative Example 3 is better, indicating that the ratio of the copolymer to silica affects the anti-fog property and wear resistance of the coating layer. That is, the higher the ratio of the copolymer to silica, the better the anti-fog property and the worse the wear resistance.

Obviously, the above-described Examples of the present invention are merely examples for clearly describing the present invention, and are not intended to limit embodiments of the present invention. For those having ordinary skills in the art, other different forms of changes or modifications can be made based on the above description. An exhaustive list of all embodiments is neither necessary nor possible, and obvious changes or modifications derived from the technical solution of the present invention are still within the protection scope of the present invention.

## Claims

1. An anti-fog coating, comprising:
a copolymer; and
a silica sol,
wherein polymerization monomers of the copolymer include an ultraviolet absorber-modified monomer, a silane monomer and an acrylate-based hydrophilic monomer, and
the ultraviolet absorber-modified monomer is prepared by a ring-opening reaction between an ultraviolet absorber with a hydroxyl group and an acrylate-based monomer with an epoxy group.

2. The anti-fog coating according to claim 1, wherein a mass ratio between the copolymer and the silica sol is (1 to 10):1.

3. The anti-fog coating according to claim 1, wherein the silica sol is prepared by mixing and reacting silicate, a catalyst, water, a third solvent, a leveling agent and a coupling agent,
in preparation of the silica sol, a mass ratio of the silicate, the coupling agent, the third solvent, water and the catalyst is (10 to 22):(5 to 18):(45 to 65):(6 to 15):(0.1 to 0.7), and
the leveling agent is used in an amount of 0.05% to 0.3% with respect to a sum of masses of the silicate, the coupling agent, the third solvent, water and the catalyst.

4. The anti-fog coating according to claim 1, wherein the silane monomer is one or a combination of two or more selected from vinyltriethoxysilane, vinyltrimethoxysilane, γ-methacryloxypropyltrimethoxysilane, methylvinyldiethoxysilane, methylvinyldimethylsilane, vinyltriisopropenyloxysilane and vinyltriacetoxysilane, and/or
the acrylate-based hydrophilic monomer is one or a combination of two or more selected from hydroxyethyl acrylate, hydroxypropyl acrylate, hydroxybutyl acrylate, hydroxyethyl methylacrylate, hydroxypropyl methacrylate and hydroxybutyl methacrylate.

5. The anti-fog coating according to claim 1, wherein a mass ratio of the ultraviolet absorber-modified monomer, the silane monomer and the acrylate-based hydrophilic monomer is (0.3 to 1):(0.3 to 1):(1 to 10).

6. The anti-fog coating according to claim 1, wherein the copolymer is prepared by polymerizing the polymerization monomers in the presence of an initiator, and the initiator is an azo-based initiator.

7. The anti-fog coating according to claim 1, wherein the ultraviolet absorber with a hydroxyl group is one or a combination of two or more selected from 2,2',4,4'-tetrahydroxybenzophenone, 2,4-dihydroxybenzophenone, 2,2'-hydroxy-4-methoxybenzophenone and 2,2'-dihydroxy-4,4'-dimethoxybenzophenone, and/or
the acrylate-based monomer with an epoxy group is one or a combination of two or more selected from glycidyl methacrylate, 4-(oxiran-2-ylmethoxy)butyl acrylate and (S)-glyceryl methacrylate.

8. The anti-fog coating according to claim 1, wherein the ultraviolet absorber with a hydroxyl group has an absorption in the range of 260 nm to 400 nm.

9. The anti-fog coating according to claim 1, wherein the ultraviolet absorber with a hydroxyl group and the acrylate-based monomer with an epoxy group undergo a ring-opening reaction in the presence of a catalyst to prepare the ultraviolet absorber-modified monomer, and the catalyst is a strongly acidic ion exchange resin.

10. The anti-fog coating according to claim 3, wherein the silicate is one or a combination of two or more of ethyl orthosilicate, methyl orthosilicate, propyl orthosilicate and butyl orthosilicate, and/or
the catalyst is one or a combination of two or more of acetic acid, hydrochloric acid and nitric acid, and/or
the leveling agent is one or a combination of two or more of polyether-modified siloxane, polyester-modified polymethylalkylsiloxane and polyether polyester-modified hydroxyl-containing polysiloxane, and/or
the coupling agent is one or a combination of two or more of γ-methacryloxypropyltrimethoxysilane, γ-aminopropyltriethoxysilane, γ-glycidyloxypropyltrimethoxysilane, trimethoxysilyl propyl diethylenetriamine and ureidopropyltriethoxysilane.

11. A method for preparing the anti-fog coating according to any one of claims 1 to 10, the method comprising:
preparing the ultraviolet absorber-modified monomer, wherein the ultraviolet absorber with a hydroxyl group and the acrylate-based monomer with an epoxy group undergo a ring-opening reaction in the presence of a catalyst in a first solvent, and after the reaction is completed, the catalyst is removed by filtering and then the solvent is removed, to obtain the ultraviolet absorber-modified monomer;
preparing the copolymer, wherein the ultraviolet absorber-modified monomer, the silane monomer and the acrylate-based hydrophilic monomer undergo a polymerization reaction in the presence of an initiator in a second solvent at a preset temperature to obtain the copolymer, and the copolymer is an ultraviolet absorber copolymer modified by a silicone monomer and a hydrophilic monomer;
preparing the silica sol, wherein silicate, a catalyst, water, a third solvent, a leveling agent and a coupling agent are mixed for reaction to obtain the silica sol; and
preparing the anti-fog coating, wherein the copolymer and the silica sol are uniformly mixed in a ratio to obtain the anti-fog coating.

12. An anti-fog glass, comprising:
a glass substrate; and
an anti-fog coating layer formed on a surface of the glass substrate by the anti-fog coating according to any one of claims 1 to 10,
wherein the glass substrate includes a light-transmitting area and a non-light-transmitting area, and the anti-fog coating layer at least covers the light-transmitting area of the glass substrate.

13. The anti-fog glass according to claim 12, wherein a visible light transmittance of the light-transmitting area of the glass substrate is greater than 70%, a diopter of the light-transmitting area of the glass substrate is not greater than 110 mdpt, and the glass substrate is a single tempered glass.

14. The anti-fog glass according to claim 12, wherein the anti-fog coating layer has a thickness of 4 µm to 30 µm.

15. The anti-fog glass according to claim 12, wherein the anti-fog glass is usable for exterior panel glass of an A-pillar and/or a B-pillar.

16. The anti-fog glass according to claim 15, wherein a distance between a boundary of the anti-fog coating layer and a boundary of the light-transmitting area is denoted as d, where d ≤ 5 mm.

17. The anti-fog glass according to claim 12, wherein a xenon lamp aging time of the anti-fog coating layer is not less than 2400 hours.

18. A method for preparing the anti-fog glass according to any one of claims 12 to 17, the method comprising:
performing a pre-treatment on a glass substrate and cleaning the glass substrate for subsequent use; and
applying the anti-fog coating to a surface of a light-transmitting area of the glass substrate, and performing leveling and curing to form the anti-fog coating layer.

19. The method for preparing the anti-fog glass according to claim 18, wherein the pre-treatment is polishing and/or a plasma treatment, and a surface dyne value of the light-transmitting area after the pre-treatment is 60 or more.

20. The method for preparing the anti-fog glass according to claim 18, wherein the leveling is performed for 10 s to 300 s, and the curing is performed at a temperature of 120°C to 200°C for 15 min to 720 min.
